(19) **Europäisches Patentamt European Patent Office Office européen des brevets**

(11) **EP 4 546 706 A1**

(12) **EUROPEAN PATENT APPLICATION**

(43) Date of publication:
**30.04.2025 Bulletin 2025/18**

(21) Application number: **24195031.0**

(22) Date of filing: **16.08.2024**

(51) International Patent Classification (IPC):
*H04L 9/08* (2006.01)     *H04L 9/32* (2006.01)

(52) Cooperative Patent Classification (CPC):
**H04L 9/0852; H04L 9/3242**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.10.2023 GB 202316332**

(71) Applicant: **Kabushiki Kaisha Toshiba**
**Minato-ku**
**Tokyo 105-0023 (JP)**

(72) Inventors:
• **WOODWARD, Robert Ian**
  **Cambridge CB4 0GZ (GB)**
• **KULKARNI, Kartik Pramod**
  **Cambridge CB4 0GZ (GB)**
• **PARAISO, Taofiq Kolawole**
  **Cambridge CB4 0GZ (GB)**
• **SHIELDS, Andrew James**
  **Cambridge CB4 0GZ (GB)**

(74) Representative: **Marks & Clerk LLP**
**15 Fetter Lane**
**London EC4A 1BW (GB)**

(54) **A NODE FOR A QUANTUM COMMUNICATION NETWORK, A QUANTUM COMMUNICATION NETWORK AND A METHOD OF PRODUCING A SIGNED MESSAGE**

(57)     A node for a quantum communication network, the node comprising:

an authentication unit and a quantum key distribution unit,

the authentication unit being configured to authenticate a channel between the node and a second node in the quantum communication network to form an authenticated channel,

the quantum key distribution unit being configured to allow a quantum key to be distributed between the node and the second node, the quantum key being sifted and processed using communication over the authenticated channel to establish a first quantum key for the node and the second node,

wherein the authentication unit comprises key management logic, the key management logic configured to provide access to a plurality of different key types, said key types being provided by at least: pre-shared keys; keys shared with the second node via the quantum key distribution unit; and key shared with the second node via a classical communication channel;

the authentication unit being configured to receive information concerning the operation of the quantum communication network and select at least one or more keys from the plurality of key types accessible via the key management logic to produce an authentication key, the authentication unit being configured to authenticate the channel using said authentication key.

FIG. 2

EP 4 546 706 A1

**Description**

FIELD

Embodiments described herein relate to a node for a quantum communication network, a quantum communication network and a method of producing a signed message.

BACKGROUND

Quantum key distribution is a technology for generating perfectly random quantum keys at two remote nodes, which can be used for data encryption to ensure secure communications. The basic operating principle of QKD relies on encoding and measuring quantum states, followed by discussion between the two nodes over an authenticated classical channel.

BRIEF DESCRIPTION OF FIGURES

FIG. 1A is a schematic showing the steps of a quantum key distribution (QKD) method;
FIG. 1B is a schematic of an example transmitter for use in QKD;
FIG. 1C is a schematic of an example receiver for use in QKD;
FIG. 2 is a schematic of a node of a QKD system in accordance with an embodiment;
FIG. 3 is a schematic showing a method for authenticating a message using MAC tags;
FIG. 4 is a schematic showing a method for computing a MAC tag;
FIG. 5 is a schematic showing key combiner decision logic interacting with key modules;
FIG. 6 is a schematic showing a method of classical (non-post quantum) key sharing;
FIG. 7 is a schematic showing a method of quantum algorithm resistant (post quantum) key sharing;
FIG. 8 is a schematic of a key combiner in accordance with an embodiment;
FIG. 9 is a schematic of a variation on the key combined of FIG. 8;
FIG. 10 is a schematic of a method of signing a message in accordance with an embodiment;
FIG. 11 is a schematic of a quantum network with a shared public key database; and
FIG. 12 is a schematic of a quantum network with the nodes of FIG. 2.

DETAILED DESCRIPTION

In a first embodiment, a node for a quantum communication network is provided, the node comprising:

an authentication unit and a quantum key distribution unit,
the authentication unit being configured to authenticate a channel between the node and a second node in the quantum communication network to form an authenticated channel,
the quantum key distribution unit being configured to allow a quantum key to be distributed between the node and the second node, the quantum key being sifted and processed using communication over the authenticated channel to establish a first quantum key for the node and the second node,
wherein the authentication unit comprises key management logic, the key management logic configured to provide access to a plurality of different key types, said key types being provided by at least: pre-shared keys; keys shared with the second node via the quantum key distribution unit; and key shared with the second node via a classical communication channel;
the authentication unit being configured to receive information concerning the operation of the quantum communication network and select at least one or more keys from the plurality of key types accessible via the key management logic to produce an authentication key, the authentication unit being configured to authenticate the channel using said authentication key.

The above node allows authentication to take place using a key which is generated by an electronic subsystem that can combine various component cryptographic keys and secrets, including from pre-shared key (PSK) stores, quantum cryptographic sources, as well as performing non-quantum cryptographic asymmetric key exchange primitives (using both conventional and "quantum-resistant" algorithms). The choice, components parameters and key combining function to form the authentication key can be dynamically adjusted, dependent on logic / algorithms that take as input, for example: input key availability, user input / security policy and/or various link and system performance metrics (which may vary with time). The key is used as part of a message authentication code, which is generated based on the key and the classical communication messages to be authenticated. The message authentication code is transmitted alongside the message and independently computed by the receiver (who has a similar authentication engine which communications with the transmitter to ensure they process keys in the same way to obtain symmetric keys for use in message authentication code computation). The authenticity of the message is confirmed if the recomputed and received code match.

The authentication unit may be configured to authenticate the channel by producing a signature for a message to be sent from the first node to the second node, the authenticated first node, the signature being produced by encrypting or hashing and encrypting at least part of the message using the authentication key. For example, wherein the authentication unit is configured to authenticate the channel using a Wegman-Carter protocol where a message is subjected to a keyed hash to produce a tag of known length and then subjected to encryption using the authentication key. Wegman Carter style codes offer information theoretic security (ITS). The Wegman Carter message authentication code may be computed, using cryptographic key material for both keying a hash function and performing an encryption of the hash. Where the cryptographic key used for the hash function and encryption may have different security properties.

In an embodiment, the type of keys are selected from PSK, QKD and non-quantum cryptographic key exchange. Non-quantum cryptographic key exchange primitive includes post-quantum cryptographic (PQC) key encapsulation mechanism algorithms (a.k.a quantum-resistant algorithms) whose security is based on the assumed hardness of certain problems for a quantum computer. This includes classes of mathematical problems such as error-correcting codes (code-based cryptography), lattice theory problems (lattice-based cryptography), hash functions (hash-based cryptography) and systems of multivariate equations (multivariate cryptography). The PQC key encapsulation algorithm may be Crystals-KYBER. The non-quantum cryptographic key exchange primitive may include conventional classical cryptography that rely on computational assumptions such as the hardness of factoring (i.e. RSA-type algorithms) and the hardness of the discrete log problem (i.e. elliptic curve type algorithms).

The information concerning the operation of the system is selected from at least one of: policies controlling the quantum network; the number of pre-shared keys and keys shared with the second node via the quantum key distribution unit and keys shared with the second node via non-quantum key exchange; measurements relating to the operation of the quantum communication network; and parameters of a quantum key distribution session.

The authentication unit may be configured to select a plurality of keys of different types and combine them to produce an authentication key. This allows for the node to be able to adapt to different requirements over time. QKD keys provide ITS. However, as QKD is relatively new, QKD is not yet standardised. Therefore, despite its high level of security, non-quantum key exchange policies are often required in order for security systems to be certified. Combining keys using functions such as XOR will allow the combined key to be compliant with agreed policies if one of the component keys of the combination is compliant with a policy.

In an embodiment, the quantum key distribution unit is configured to generate keys to add to a key store of keys shared with the second node via the quantum key distribution unit. Thus the QKD key store is continually replenished. However, the authentication unit can determine if the rate of replenishment will satisfy the rate of use and hence reduce use of QKD keys to avoid depleting the QKD key store. Some of the QKD keys are used for authentication whereas other QKD keys are used to encrypt messages (other than authentication messages) to be sent to another node.

In an embodiment, the authentication unit uses asymmetric key exchange algorithms (using conventional classical algorithms or PQC) to produce cryptographic keys for authentication to authenticate new users on a network for which pre-shared key or QKD key material is not available. In a further embodiment, the classical key exchange algorithms may run continuously to populate key pools of classical keys, which may be used by the authentication engine as required (reducing latency compared to perform key exchange on demand). In other embodiments, classical key exchange is performed on demand.

In an embodiment, the conventional key exchange algorithms are pipelined using pseudorandom functions, before being XORed with pre-shared key and/or QKD key material to form the final key. An input such as a counter or cryptographic nonce may seed the pipeline. In an embodiment, the authentication unit is configured to combine two of the keys of different types by using one key to seed a pseudorandom function used to increase the length of another key.

The above node can be used in a quantum communication system employing the aforementioned authentication unit for classical communications involved in quantum post-processing. The resulting generated quantum keys have metadata associated with them that indicates the authentication properties of the link at the time of performing post-processing.

The above node may be used in a quantum communication network employing the aforementioned authentication unit for classical communication between all nodes, with (optionally) different key combining approaches selected for adding new nodes to the network compared to communication between nodes that have previously authenticated.

In a further embodiment, a quantum communication network is provided where a database of private/public key pairs is generated initially, where each node has a single private key and all the public keys installed, such that new nodes can be added by simply installing one of the pre-generated private keys. This enables key exchange using asymmetric cryptography, where the keys are then used for message authentication codes. This avoids the need to communicate public keys over the network. In this embodiment, each node uses a lookup table to find the public key in its database for a remote node when initiating a new connection. The public key may be for an asymmetric conventional or PQC key encapsulation mechanism.

In a further embodiment, a quantum communication network is provided where PQC PKI is established, including certificate authorities (CA) that issue digital certificates containing public keys or each node of the network. The certificates are signed using PQC signing algorithms (e.g. CRYSTALS Dilthium). Each node can use the certificate to validate the public key of another node, and then use it to perform key encapsulation, where the resulting keys are then used for QKD authentication.

In a further embodiment, for public/private key generation, and whenever randomness is required for execution of the classical cryptographic algorithms, a quantum random number generators (QRNG) is used. Alternatively, QKD keys may be taken from a key management system and used as random numbers.

In a further embodiment, a quantum communication system is provided comprising:

a first node which is a node as described above; and a second node, wherein the second node is also as described and has an authentication unit which is configured to compare the signature it has generated from the message with a signature received with the message, the authentication unit being configured to determine that the message is authenticated if the signatures match..

In the above quantum communication system, wherein each node comprises a classical key store which comprises a plurality of public keys in a look up table, the authentication unit being configured to receive an index indicating a public key to use from its look-up table.

In a further embodiment, a method of producing a signed message for authentication in a quantum communication network is provided, the method comprising:

receiving a message to be sent over an authenticated channel;
producing an encryption key; and
generating a signature from said message using the authentication key,
wherein producing an authentication key comprises receiving information concerning the operation of the quantum communication network and selecting at least one key type from a plurality of different key types of the basis of this received information, wherein the key types are selected from: pre-shared keys; keys obtained by sharing a key via a quantum key distribution unit; and keys shared over a classical communication channel.

Producing the authentication key may comprise combining two or more of the plurality of types of keys.

A carrier medium may be provided with code adapted to cause a computer running the code to perform the methods of the above embodiments.

The above embodiments may be implemented in software or with hardware acceleration (e.g. ASIC / FPGA / GPU etc.). They may also be applied to free-space QKD, fibre-based QKD or a mixture thereof. The QKD networks used above may be selected from, for example, point-to-point QKD, CV QKD, DV QKD (including BB84 QKD and derivatives, MDI QKD and TF QKD).

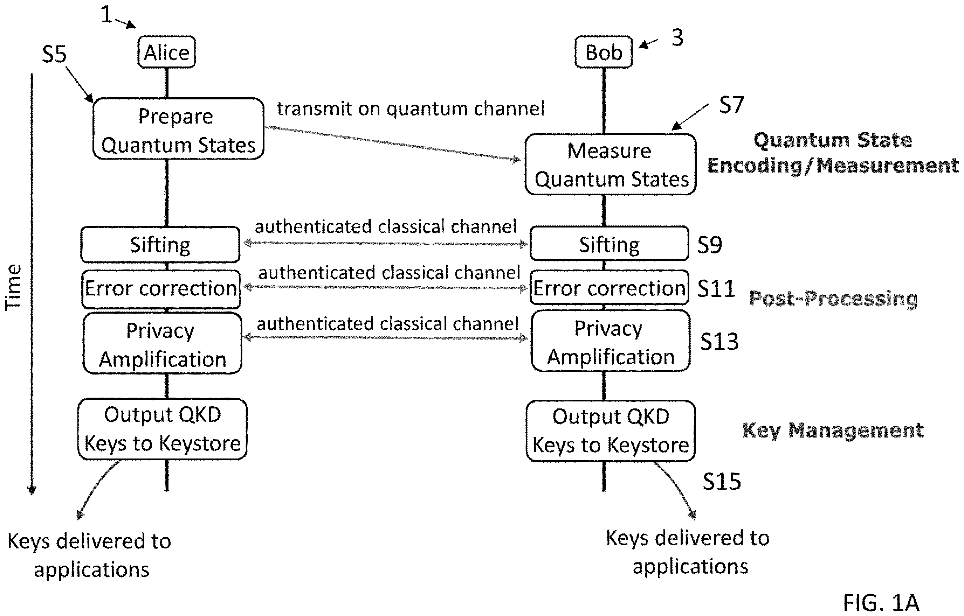

FIG. 1A is a schematic showing quantum key distribution. In the example that will be described with reference to FIG. 1A, a sender, Alice 1 prepares quantum states in step S5 and sends them to a receiver which will be termed Bob 3. Bob receives the quantum states and decodes the states in step S7. This is an example of a point-to-point QKD system where Alice 1 can be thought of as a transmitter and Bob 3 as a receiver.

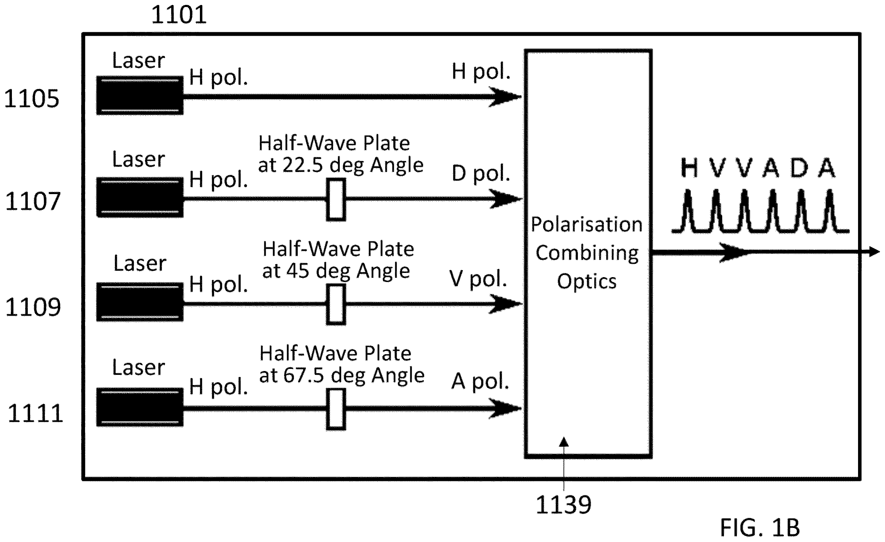

An example of a possible transmitter is shown as 1101 in FIG. 1B. The transmitter can be any type of quantum transmitter which is capable of emitting encoded photons. In this particular example, polarisation encoding will be explained, but any type of encoding, phase, energy/time could be used. In this example, the transmitter 1101 comprises four lasers, 1105, 1107, 1109 and 1111 each of which emit horizontally polarized light. The output from laser 1105 is provided towards polarisation combining optics 1139. The output from laser 1107 is provided towards polarisation combining optics 1139 via a half wave plate which is configured to convert the horizontally polarized light to diagonally polarized light. The output from laser 1109 is provided towards polarisation combining optics 1139 via a half wave plate which is configured to convert the horizontally polarized light to vertically polarized light. The output from laser 1111 is provided towards polarisation combining optics 1139 via a half wave plate which is configured to convert the horizontally polarized light to anti-diagonally polarized light.

Polarisation combining optics allows the different polarisations to be combined into a stream of pulses with randomly varying polarisations. This may be achieved in many different ways. For example, the lasers may be pulsed lasers and a controller (not shown) is provided to randomly select a laser from lasers 1105, 1107, 1109 and 1111 to randomly output a pulse such that one pulse at a time reaches the polarisation combining optics. In other embodiments, the polarisation combining optics or a further component may be configured to randomly select the output from one laser or randomly selectively block the output from three lasers to allow for the pulsed output stream. The pulses may be produced by pulsed lasers or cw lasers may be used with a further component to chop the output into pulses.

An attenuator (not shown) is then used to attenuate the output of the pulses so that they contain on average less than one photon. Alternatively, single photon emitters can be used instead of lasers 1105, 1107, 1109 and 1111.

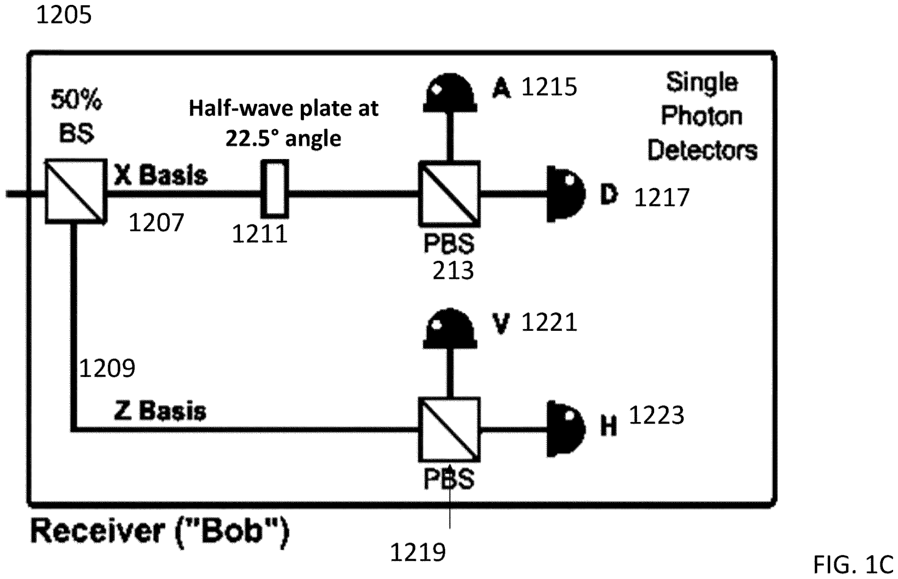

A simplified form of the receiver is shown in FIG. 1C. The receiver comprises a 50-50 beam splitter 1205 which will direct the incoming pulse either along first measurement channel 1207 or a second measurement channel 1209. Since the pulses contain on average less than one photon, the 50-50 beam splitter 1205 will direct the pulse randomly along one of the first measurement channel or the second measurement channel. This has the result of selecting a measurement basis to be the X (D/A) basis or the Z (H/V) basis. The non-polarising beam splitter 1205 functions to allow random selection of one of the two bases.

The first measurement channel is for the X basis which corresponds to the D/A bases. Here, a half wave plate 1211 is provided to rotate the polarisation by 45 degrees between the two detection branches, i.e. giving the 2 measurement bases X and Z. The output of the half wave plate 1211 is then directed towards polarising beam splitter 1213. Polarising beam splitter 1213 directs pulses with anti-diagonal polarisation towards anti-diagonal detector 1215 and pulses with a diagonal polarisation towards diagonal detector 1217. Detectors 1215 and 1217 are single photon detectors, for example avalanche photodiodes.

Pulses directed along the second measurement channel are measured in the Z basis to determine if they are horizontal or vertical. Here, the pulses directed into the second measurement channel are directed toward polarising beam splitter 1219 which directs vertically polarised pulses towards detector 1221 and horizontally polarised pulses towards detector 1223. Again, detectors 1221 and 1223 are single photon detectors.

If a photon is received which is polarised in the D/A bases and this is randomly sent to be measured in the Z bases along the second management channel 1209, one of detectors 1221, 1223 are likely to register a count However, this result can contribute to increased quantum bit error rate as a photon received at polarising beam splitter 1219 has a 50-50 chance of being directed towards either the vertical or the horizontal detector.

To establish their key, Alice 1 and Bob 3 perform a sifting process in step S9 where one of the parties discloses to the other, after communication, which measurement basis they used. The other party then confirms which results need to be discarded as they were not measured in the correct basis. This is the sifting process of step S9.

Next, in step S11, both parties perform error correction, to correct any bit errors and to calculate the number of errors. Next, in step S13, privacy amplification is performed to take into account the measured error rate to produce a final key. This is then stored to the key management system in step S15.

The above system is a point-to-point QKD system, but any type of system could be used, for example CV QKD, DV QKD (including BB84 QKD and derivatives, MDI QKD and TF QKD).

The above described QKD is a cryptographic primitive for the generation of random digital keys shared between remote users (conventionally referred to as Alice and Bob), where the security of the key exchange process can be quantified using theoretical principles alone (specifically, information theory and quantum theory). This means that QKD is secure against attacks where the eavesdropper (conventionally referred to as Eve) may possess extreme computational power (e.g. a large-scale fault-tolerant quantum computer). This is known as 'information theoretic security' (ITS) and the security is quantified as a security parameter, $\varepsilon$, which describes the probability of the scheme failing. With appropriate system design, $\varepsilon$ can be made negligibly small - thus offering unprecedented security.

This feature of QKD is in stark contrast to conventional public key cryptography approaches to key exchange (such as RSA, Elliptic Curve Cryptography etc.), which all rely on computational assumptions - i.e. the perceived difficulty for computers to perform certain tasks. These assumptions are broken in the era of quantum computing and it is even possible for an attacker to harvest current data transmissions sent with classical encryption, then in the future, decrypt them using more powerful computers ("harvest-now-decrypt-later attack").

In brief, QKD commonly operates as illustrated in FIG. 1A by transmitting (from Alice) and measuring (at Bob) quantum states, then post-processing the measurements to output a secure key. Due to the laws of quantum mechanics, any attempts by Eve to intercept the quantum states will result in her unavoidably altering the states. This can therefore be detected based on the measurements at Bob and post-processing (comprising various stages including sifting, error correction and privacy amplification) performed using communication over an authenticated classical channel between Alice and Bob.

The requirement for authentication on the classical communication channel is actually a non-trivial problem, particularly when considering how QKD scales to build larger networks. It is, in fact, a critically important problem to consider too, since the security of an overall QKD system depends on the security of its authentication scheme (e.g. when analysing the overall system within the widely used framework of Universal Composability).

One approach for message authentication is an asymmetric digital signature scheme. Here, Alice applies a mathematical algorithm to her message using her private key, resulting in a unique digital signature. This digital signature is transmitted to Bob alongside the message. Upon receipt, Bob applies a verification algorithm on the message and signature, which also takes as input Alice's public key. The verification algorithm returns true when no tampering has occurred, thus assuring message authenticity and integrity.

But how does Bob get a copy of Alice's public key to use for verification? It would be simple for a man-in-the-middle (Eve) to break the security of the scheme if they could trick Alice into believing that Eve's public key was actually from Bob. This problem is conventionally solved using certificates.

A certificate is a digital file that binds a public key to a specific entity. It is issued by a Certificate Authority (CA), which is a third-party organization that is considered trusted by Alice and Bob (such as a root CA company or the equipment vendor's CA). The CA acts as a trusted authority that validates the identity of the entity and verifies the ownership of the public key. The management of CAs and handling of certificates is often described by the term Public Key Infrastructure (PKI).

Returning to the original message authentication problem, Alice can thus first share her CA-signed certificate to Bob. Assuming Bob trusts the CA, he extracts Alice's public key from this, thus enabling the complete described message authentication scheme.

For QKD, Alice and Bob communicate post-processing messages for each QKD session. Each message could be authenticated by an iteration of the above digital signature scheme. This approach is not ideal for QKD, however, as the security of asymmetric signing and verification algorithms rely on computational hardness assumptions. Classically, digital signature schemes have been built upon the assumed hardness of the discrete log problem (e.g. DSA, ECDSA, EdDSA) and the integer factorization problem (e.g. RSA).

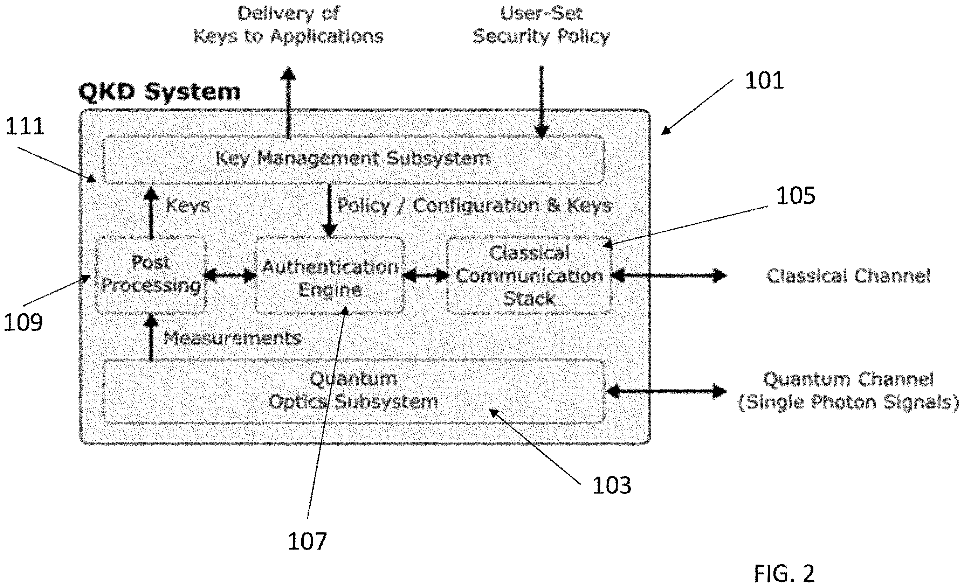

FIG. 2 is a schematic of a node 101 of a QKD system in accordance with an embodiment. A single QKD node is shown, which could be connected to any number of other QKD nodes to form a quantum communication network. The node 101 comprises a quantum optics subsystem 103. Quantum optics subsystem 103 is a receiver, transmitter, or combined receiver and transmitter which is capable of encoding and/or decoding information onto optical signals wherein each quanta of the optical signal has an average number of photons which is less than 1. The generation and measurement of QKD-encoded signals is handled by the Quantum Optics Subsystem 103, which includes random pattern generation, generation of encoded single photons and/or single-photon detection (depending on whether the node is a transmitter (Alice) or receiver (Bob) node; although it could also be both, i.e. a transceiver). Possible arrangements of quantum optics subsystems 103 are described above with reference to FIGs. 1B and 1C.

The quantum optics subsystem 103 connected to a quantum channel which may be a free space channel, fibre based channel or a mixture of both. The quantum channel is a channel which is capable of carrying an optical signal from the quantum optics subsystem where the signal is encoded onto quanta of an optical signal.

The quantum measurements (e.g. photon generation / detection signals) are passed to the post-processing module 109 which applies sifting, error correction and privacy amplification algorithms to process the raw measurements into secure keys. A Key Management Subsystem 111 handles key storage and delivery to user applications (e.g. hosting a server which can respond to requests for keys as per internationally standardized key delivery APIs).

A classical communication stack 105 is provided which is connected to a classical channel. In FIG. 2, the classical channel is shown physically separate from the quantum channel. However, the quantum channel and the classical channel may be together in a single fibre. The classical communication stack 105 is used to communicate with the second node in order to perform sifting and other operations as described above.

For the reasons described above, the second node needs to be authenticated in order to determine if the signals that it is receiving from the second node can be trusted. It attends that this via the use of the authentication engine 107.

Post-processing information which is communicated between different QKD Systems passes through an authentication engine 107 prior to handling by the classical communication stack 105 (which handles standard communication tasks such as classical error correction and interfacing with physical network adapters such as pluggable SFPs). The authentication engine accepts inputs from the post-processing stage including information about the QKD system performance and link (e.g. quantum bit error rate, secure bit rate, link length/loss, whether any other 'bright' data channels are sharing the link etc.). The authentication engine also accepts input from the Key Management Subsystem 111, which allows users to set the security policy and priorities for their organization. This information is translated into policy rules / configuration for the authentication engine (as explained later). In other embodiments, the policy/configuration for authentication may be communicated from the user to the system by other means, e.g. using a software-defined networking controller or direct local access to the QKD system command-line interface. Finally, the authentication engine can also accept keys as input from the Key Management Subsystem, where these QKD-generated keys are to be used as part of the authentication process. The authentication engine 107 may also record authentication-related information as key metadata, which may be passed to either the post processing module or the Key Management Subsystem directly, where the metadata is stored alongside the key itself (ready for retrieval by users).

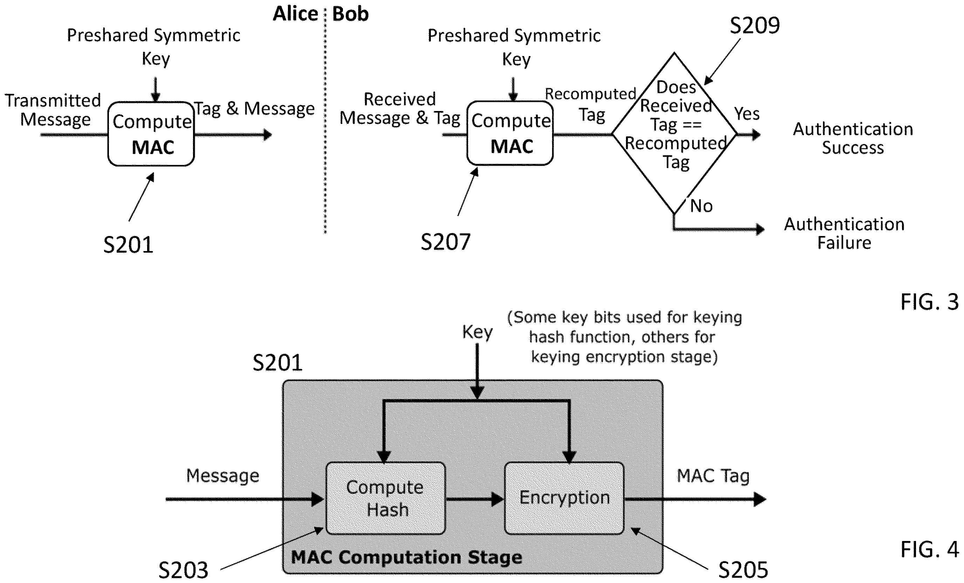

FIG. 3 is a diagram explaining at a high level a possible authentication process in accordance with an embodiment, which is based on symmetrically-keyed message authentication codes (MACs).

Message authentication codes (MACs) using pre-shared symmetric keys, for example following the style of Wegman-Carter, are well suited to the task of authenticating QKD post-processing communications. Further, Wegman-Carter MACs enable information theoretic secure (ITS) authentication. In other words, they provide 'perfect security' with quantifiable failure probability (not based on computational assumptions).

The operation of Wegman-Carter MACs in authentication will be described with reference to FIGs. 3 and 4:

    1. For each message to be communicated from the first node (which will be referred to as Alice) to the second node (which will be referred to as Bob), Alice computes a 'tag' (aka a 'code') in S201 using digital key material that she has pre-shared with Bob). As demonstrated in FIG. 4, the tag is formed by applying a keyed hash function to the message in S203, then applying a one-time-pad to encrypt the hash in step S205. (Other algorithms may also be used).

2. The tag is sent along with the message to Bob.

3. Bob recomputes the tag based on the message he receives in step S207(this requires Bob to have a copy of the same keys used as Alice, shared ahead of time) and compares it to the received tag in step S209. If they match, Bob can be confident that the message authenticity and integrity are good, since only someone knowing the secret pre-shared key can generate the correct tag.

In an ITS Wegman-Carter scheme, authentication keys can only be used once. They cannot be re-used or expanded using e.g. a pseudorandom function (PRF).

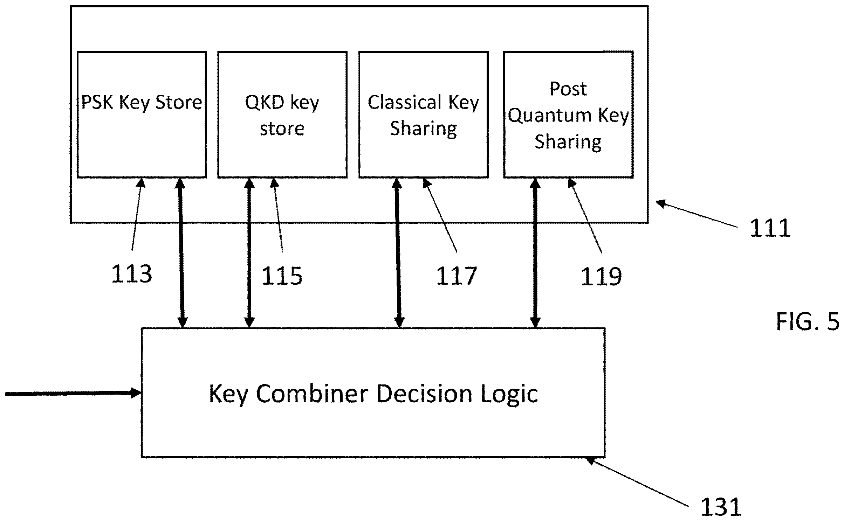

Thus, given a finite initial amount of key pre-shared between Alice and Bob, authentication cannot proceed indefinitely. FIG. 5 is a schematic of a key management subsystem 111. The key management subsystem 111 has a plurality of key modules each of which is capable of contributing a key to the authentication engine to form the authentication key. The authentication engine will then determine which keys to select and combine the selected keys.

PSK key store 113 is used to store pre-shared keys which were provided in the node when it was manufactured or have otherwise been securely provided to the node, for example keys may be installed on the node during servicing or by a trusted person physically installing new keys on the node.

It is also possible for ITS-grade keys to be generated by a QKD protocol. During QKD as described with reference to FIG. 1A, a key is shared between two nodes. This key is intended for encrypting messages to be sent between the two nodes. However, some of this key material can also be used for authentication and provides to QKD store 115 for this use. This ability to distribute keys with provable security is unique to quantum communications. To provide an authentication system for QKD, the initial authentication (e.g. connecting new remote nodes together without prior pre-shared key) is a challenge, but thereafter, generated QKD material can be used for subsequent authentication sessions. While this is a robust method, it has the downside of using up generated QKD keys rather than making them available for users.

In addition to the PSK key store 113 and the QKD key store 115, there are stores provided for keys that can be shared over a classical channel. Specifically, the key management subsystem 111 may execute classical key exchange algorithms with computational security such as Diffie-Hellman (DH) or Elliptic Curve Diffie-Hellman (ECDH). Such algorithms are already part of international cybersecurity standards (e.g. FIPS standards), which motivates their use as part of the combined key for QKD session authentication. In addition, the key management subsystem 111 may also implement PQC classical-information key encapsulation using algorithms with computational security, but where the underlying problems are believed to be hard for even a quantum computer.

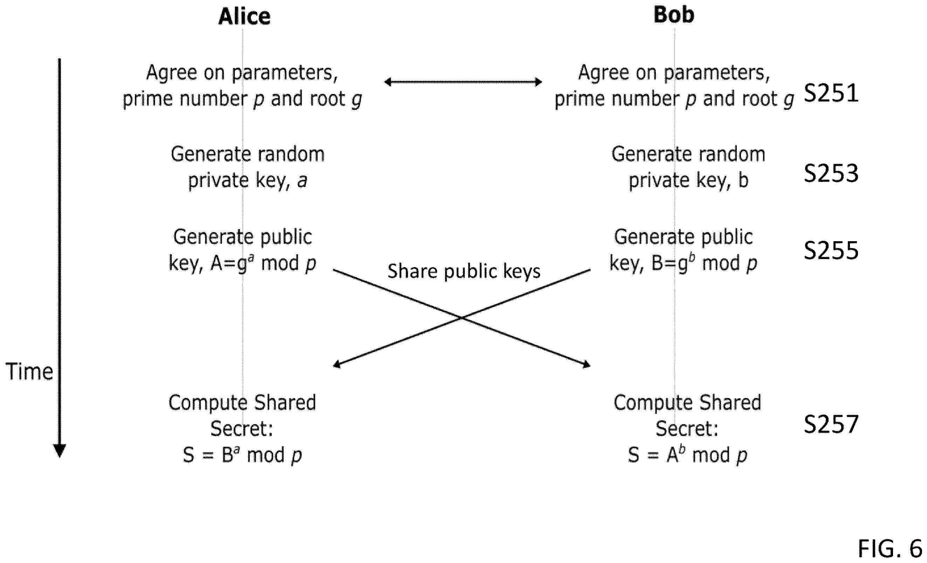

A (non-PQC) classical key exchange using the Diffie-Hellman approach is now described and shown in FIG. 6. First, both parties agree on certain parameters (a large prime number ($p$) and a primitive root modulo p ($g$)), *a priori* or in public in step S251. Each party then generates a private key (a random number) in step S253 and uses this to calculate their public key in step S255 by raising the agreed-upon rootgto the power of their private key, modulo the prime number $p$. The public keys A and B are shared between the two parties. Alice then takes the public key received from Bob and raises it to the power of her private key, modulo the prime number $p$. Bob takes the public key received from Alice and raises it to the power of his private key, modulo the prime number $p$. Both parties get as output from this calculation, an independently calculated shared secret key in step S257.

The security of Diffie-Hellman key exchange relies on the computational difficulty of solving the discrete logarithm problem. Given the values of $p, g,$ and either A or B, it is computationally infeasible to determine the private key ($a$ or $b$) used to compute the shared secret without significant computational resources. The resulting shared secret key can be stored in classical key sharing module 117. Classical key sharing module can store keys that have been pre-shared using the method described with reference to FIG. 6 so that such keys are ready to be used or classical key sharing module 117 can be configured to start the process of FIG. 6 to obtain a key once the authentication engine has indicated that there is a requirement for such a key.

The key management subsystem 111 also comprises a post quantum key sharing module 119 that supplies keys which are shared using PQC, which includes post-quantum classical-information key encapsulation using algorithms with computational security, but where the underlying problems are believed to be hard for even a quantum computer. This includes classes of mathematical problems such as error-correcting codes (code-based cryptography), lattice theory problems (lattice-based cryptography), hash functions (hash-based cryptography) and systems of multivariate equations (multivariate cryptography). Such algorithms are currently being standardized (e.g. by NIST). Note that both PQC digital signature schemes (DSSs) and PQC key encapsulation mechanisms (KEMs) are being standardized.

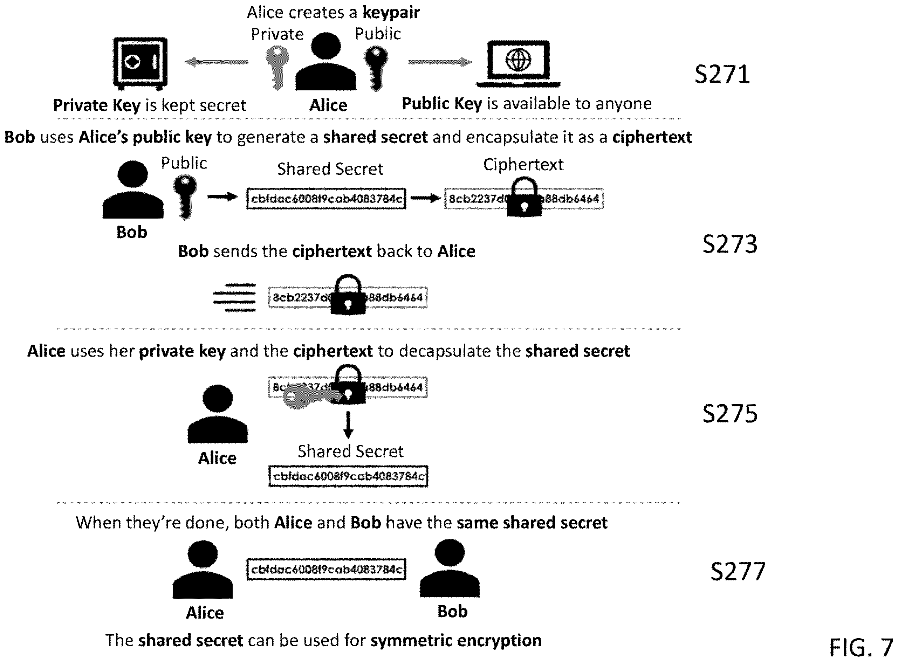

FIG. 7 shows a high-level process for a KEM algorithm. It begins with one of the users (here, Alice) in step S271 creating a public/private key pair and sharing the public key to the other party (see later for discussion of public key sharing). Bob then generates a random secret in step S273 to be shared and uses Alice's public key to 'encapsulate' this into a ciphertext. The ciphertext is transmitted to Alice in public - if an attacker intercepts this, it is computationally hard to reverse, thus protecting the secret. When Alice receives the ciphertext, she uses her private key in step S275 to 'decapsulate' the secret from it Alice and Bob now share a secret in step S277, which is stored in post quantum key sharing module 119. Post quantum key sharing module 119 can store keys that have been pre-shared using the method described with reference to FIG. 7 so that such keys are ready to be used or post quantum key sharing module 119 can be configured to start the process of FIG. 7 to obtain a key once the authentication engine has indicated that there is a requirement for such a key.

In one embodiment, the post quantum key sharing module 119 executes CRYSTALS-Kyber as the PQC KEM. Kyber's security is based on the hardness of solving the learning-with-errors (LWE) problem over module lattices. To briefly (and in a simplified way) explain the operation (note: all calculations are implicitly done using modulo arithmetic with some pre-agreed (non-secret) modulus), the public/private keypair generation stages comprise: first, Alice computes a private key containing random values that represent coefficients of multiple polynomials. The public key is formed by generating a matrix of random polynomials. A vector is computed as the product of this matrix with the private key, with addition of some additional random error vector (of polynomial coefficients). The public key comprises both the matrix and derived vector of polynomials. To derive the secret key back from the public key would require the attacker to solve the module-learning-with-errors (MLWE) problem, which is believed to be hard for even quantum computers.

For Bob to encapsulate a random binary string (to use as the shared key) for sending to Alice, the string is encoded as a polynomial and Bob also computes some random valued polynomials to use in the computation. The ciphertext is formed by multiplying Alice's public key with these polynomials and adding the key to be shared. The cipher text is then transmitted to Alice.

Alice decapsulates the ciphertext by multiplying part of it with her private key, subtracted from another part of the ciphertext The output is a noisy version of the shared secret (since Bob intentionally added errors), but Alice can perfectly remove the noise to obtain the shared key by rounding since the errors are small. As a result, Alice and Bob are left with a shared secret key, which can be used post quantum key sharing module 119. Post quantum key sharing module 119 can store keys that have been pre-shared using the method described above so that such keys are ready to be used or post quantum key sharing module 119 can be configured to start the above described process to obtain a key once the authentication engine has indicated that there is a requirement for such a key.

The authentication engine can then call on the keys from the PSK Key store 113, QKD key store 115, classical key sharing module 117 and post quantum key sharing module 119 to produce an authentication key. The authentication engine performs two stages when producing the authentication key:

(i) Selecting the type of keys from the key management subsystem 111;
(ii) Combining the selected keys

(i) Selecting the type of keys from the key management subsystem is performed by Key combiner decision logic 131 shown in FIG. 5.

The key management subsystem can store or access different types of keys as described above. Dependent on the network requirements, the key combiner decision logic may or may not wish to select certain types of keys.

The key combiner decision logic can receive many different inputs, for example:

(i) Size of key pool (both PSK and QKD)

If a PSK or QKD key store is running low then use of these keys can be deprioritised to avoid complete depletion of the key store.

(ii) Link metrics (e.g. length/loss)

If the QKD system measures the link in advance of running QKD, it knows that high loss / long length will result in low key rates for QKD. Thus, it can use this information to estimate how much QKD key will be available and potentially, to deprioritise use of QKD key when it expects the rates will be low.

(iii) QKD metrics (e.g. QBER, Count rate, SBR)

QKD metrics are used in the same way a link metrics. However, QKD metrics are more accurate than link metrics as they are QKD measurements. One can estimate QKD metrics from link metrics which can be faster / simpler than relying on real time measurements.

(iv) QKD session information (e.g. index/timings)

When running QKD, the concept of a session refers to a single window of performing QKD. An authentication key may be used for each session (dependent on the security policy). Thus, if the sessions are very short, the system knows that it may need lots of key material to use for authentication, and thus, it could favour using PQC to avoid QKD key depletion.

(v) User security policy (e.g. weightings)

The embodiments described herein allow a user to define the exact combining approach based on their needs. For some organisations, there may be a requirement to use PQC keys in combination with every other key. Other organisations may always require QKD keys to be used to ensure ITS. It is also possible for other organisations where there's some flexibility, to define more complex rules (e.g. try to use QKD for authentication, unless there's a low key pool for applications. Thus, weightings are applied, i.e. giving priority to certain key inputs over others.

(vi) Network policy (e.g. from SDN controller) This is similar to the considerations above for user policy settings. The User policy will be set by a local user whereas the network policy is set by the network. In some cases, a user might be permitted to override the network policy.

The PSK key store 113 contains keys that have been pre-stored in the key management subsystem during device manufacture or during servicing with a "trusted courier". They have never been communicated over a communication system (either quantum or classical) and are therefore ITS grade keys.

However, the number of PSK keys is finite. In order to ensure ITS grade keys, they cannot be re-used. They cannot also be expanded using e.g. a pseudorandom function (PRF). Thus, given a finite initial amount of key pre-shared between Alice and Bob, authentication cannot proceed indefinitely.

As part of the selection process, the Key combiner decision logic 131 can consider one or more of the following parameters to determine if a PSK should be selected:

(a) The number of PSKs available from the store. If the number is below a threshold, a PSK may not be selected
(b) Requirement that ITS keys must be used combined with a number of QKD keys that are below a threshold.

As part of the selection process, the Key combiner decision logic 131 can consider one or more of the following parameters to determine if a QKD key should be selected:

(a) The number of QKD keys available from the store. If the number is below a threshold, a QKD keys may not be selected
(b) Requirement that ITS keys must be used combined with a number of PSKs that are below a threshold
(c) The QKD metrics or link metrics, for example, if the QBER is above a threshold then making more QKD keys will be slow and this suggests that QKD keys should not be used.
(d) QKD session lengths suggesting that QKD keys will be quickly consumed during authentication.

As part of the selection process, the Key combiner decision logic 131 can consider one or more of the following parameters to determine if a key obtained from classical key sharing module 117 should be included. As a short-hand this will be referred to as a "classical key" which will be taken to mean a key shared over a classical channel using non-post quantum cryptography techniques.

(a) The network operates under at least one security policy (either at user or network level) that requires the use of a classical key of the type obtained by classical key sharing module 117.

As part of the selection process, the Key combiner decision logic 131 can consider one or more of the following parameters to determine if a key obtained from post quantum key sharing module 119 should be included. As a short-hand this will be referred to as a "PQC key" which will be taken to mean a key shared over a classical channel using post quantum cryptography techniques.

(a) The network operates under at least one security policy (either at user or network level) that requires the use of a classical key of the type obtained by post quantum key sharing module 119.

As can be seen from above, the Key combiner decision logic 131 also accepts input from, for example, a Key Management Subsystem, which allows users to set the security policy and priorities for their organization. This information is translated into policy rules / configuration for the authentication engine (as explained later). In other embodiments, the policy/configuration for authentication may be communication from the user to the system by other means, e.g. using a software-defined networking controller or direct local access to the QKD system command-line interface.

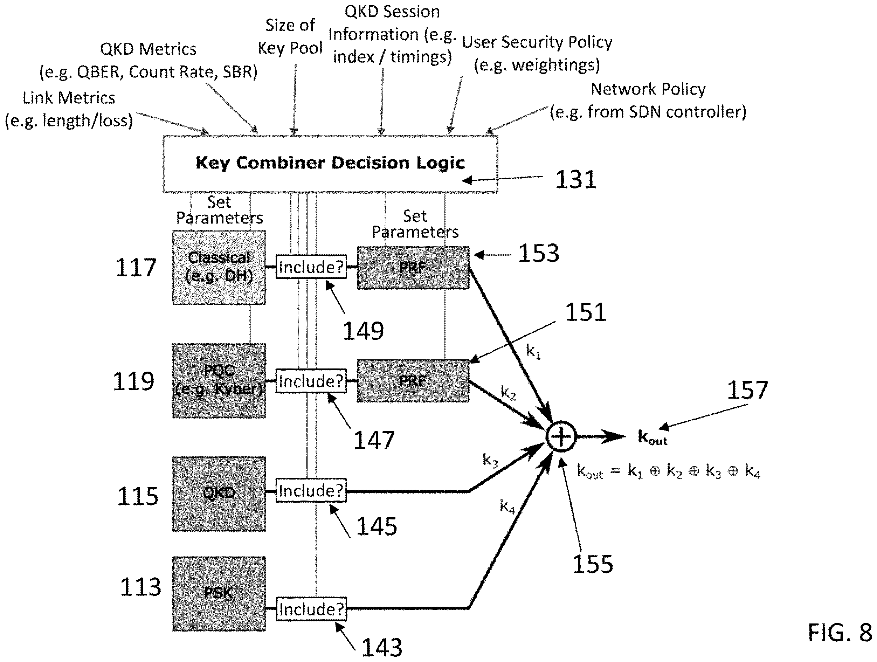

(ii) The authentication engine then combines the keys using a key combiner of the type described with reference to FIG. 8. The Key combiner decision logic 131 has been described above, this selects the keys for combination from the PSK Key store 113, QKD key store 115, classical key sharing module 117 and post quantum key sharing module 119. In FIG. 8, the selection is shown via an include module 143, 145, 147 and 149 provided at the output of PSK Key store 113, QKD key store 115, classical key sharing module 117 and post quantum key sharing module 119 respectively. The key combiner decision logic 131 providing a control output to each include module 143, 145, 147 and 149 to indicate whether a key from PSK Key store 113, QKD key store 115, classical key sharing module 117 or post quantum key sharing module 119 should be included in the outputted key.

An example of possible rules for selecting keys has been explained above.

The key combiner can selectively use any of the inputs described above to form a final key to be used for MAC computation. The key combiner should preserve the security of each input primitive, such that the overall security of the system is preserved providing at least one of the input primitives remains secure.

The key combiner takes many possible factors as input into a decision logic module, including measured link parameters (e.g. length/loss), QKD performance metrics, post-processing session information and status of key pool (i.e. QKD key & PSK availability), and user-defined / network-defined security policies. The output(s) from this control the key derivation function which produces the final key for authentication.

At the most basic level, the combiner can selectively enable/disable each of the 4 possible components. For example, if the input key pool information suggests there is insufficient PSK or QKD key material, then PSK and QKD keys can be excluded for use in the combined key.

The combiner can also adjust the parameters of all algorithms involved. For example, the combiner can select different classical or PQC key exchange algorithms. In one possible embodiment, the combiner could execute multiple different classical and PQC algorithms. Even for a chosen algorithm, the combiner can vary the algorithm's parameters, for example the key size. One could imagine a network administrator defining a list of organizationally approved algorithms, which would be input as security policy to the combiner, so it knows to only use approved ones.

For computationally secure key exchange schemes, i.e. classical and PQC key exchange, it may be desired to increase the key length through the use of a pseudorandom function (PRF) 151 for PQC keys and 153 for classical keys. This can affect the security level, but it can increase the amount of key available. Asymmetric cryptography is intrinsically compute-intensive and classical/PQC key exchange will often execute much slower than QKD key generation rates. Therefore, the use of PRF can equalize the size of generated keys from each components being combined. The key combiner decision logic 131 can adjust parameters and declare whether a PRF is used or not.

The combiner decision logic can include more complex algorithms to optimize QKD system performance too. For example, if the link metrics & QKD metrics suggest only low QKD key generation rate is possible (e.g. high loss, high QBER, low count rate etc.), then the combiner may preferentially select classical/PQC keys for use as component keys. This avoids using up QKD keys for authentication when they instead could be given to users for their applications.

Similarly, the decision logic could consider QKD session information, including timings, to define the combining approach and how long a single authentication session is (i.e. for how long to use a single authentication key). In the case of initial connections to new QKD systems, no PSK or QKD key material may be available, so the key combiner will select classical or PQC approaches to initialize the authenticated classical channel.

The selected keys are combined by combiner 155 which, in this case, combines keys using an XOR function to produce output key $k_{out}$ 157.

XOR may operate in a bitwise fashion $k_{out} = k_1 + k_2 + k_3 + k_4$. Practically, this is implemented by summing each bit modulo 2. This can be applied for any number of inputs in any order (XOR is both commutative and associative). For example:

$$K1 = 0000$$

$$K2 = 0010$$

$$K3 = 1111$$

$$K4 = 0111$$

$$Kout = 1010$$

The key combiner can also adjust the key combining function itself dynamically. For example, if the QBER improves, then the combiner could start to select QKD keys.

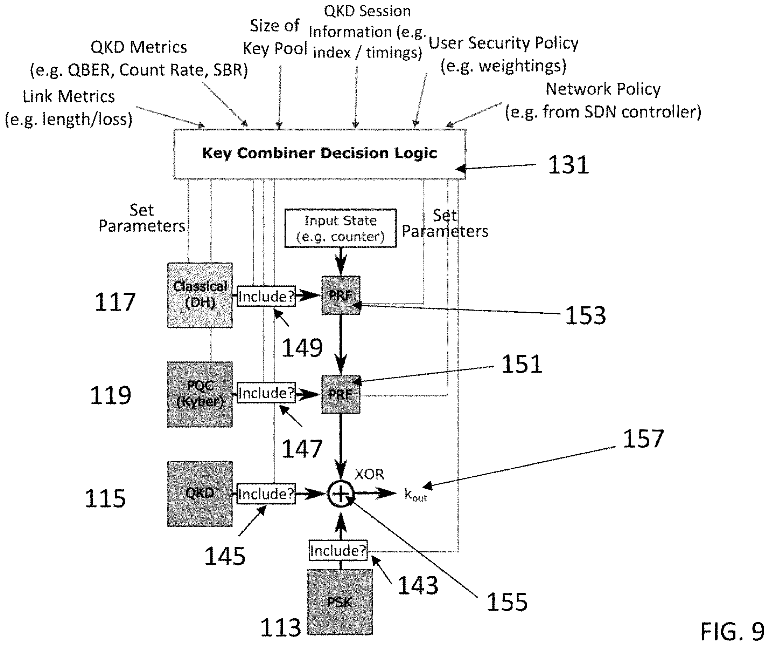

While FIG. 8 showed a combining function based on XOR, other approaches are possible. FIG. 9 shows a further variation on the key combiner of FIG. 8. To avoid an unnecessary repetition, like reference numerals will be used to denote like features. FIG. 9 is based on a pipeline where the classical and PQC stages are performed sequentially, also including an optional input state such as a session counter or a cryptographic nonce. in FIG. 9, the classical key is used as a seed for the PRF 151 which is used to extend the PQC key.

In FIG. 9, QKD and PSK are still combined with the output from PQC and classical stages using an XOR however, to preserve their properties (since QKD and PSK can be information theoretically secure).

The combination of keys (even when QKD keys are available) offers 2 practical advantages:

    1) Compliance. Regulated industries (e.g. finance) have set current regulatory requirements (e.g. NIST FIPS). While it's understood that RSA/ECC are going to fail in the future, the current standards for cybersecurity demand their use. PQC will also be standardised before QKD. The combiner approach allows the system to be robust and adapt as new encryption technologies become standardized.

    2) As a failsafe. While QKD vendors do their utmost to ensure their hardware works properly, customers want reassurance about new technologies. With an XOR combiner, the final key is secure as long as one other part of the combined key is secure. Thus, if the QKD system hypothetically failed in an insecure way, the output keys are still secure to the level of the next-best key. This is advantageous to generating completely insecure keys if there is no combiner and QKD somehow fails quietly.

In an embodiment, the key combiner could record the approach used for each authentication session and relay this information to the post-processing/key management sub-systems. This information can be stored as metadata alongside the QKD keys that are generated during each authenticated post-processing session and made available to users when they request keys.

It is explained above with reference to FIG. 4 that a key is used to compute a hash in S203 and then for encryption in S205. Different keys are used for both of these steps. One or both of the keys may be supplied from the key combiners of FIG. 8 or FIG. 9. In an embodiment, at least the key required for encryption stage S205 is supplied from the key combiner of FIG. 8 or FIG. 9. The above embodiment allows the keys for S203 and S205 to be independently adapted to individual policy requirements of the keys for S203 and S205.

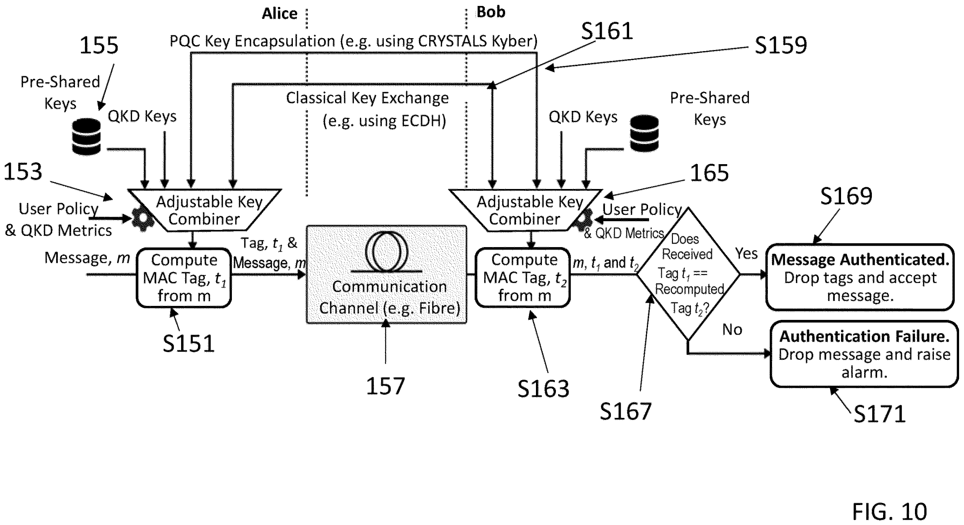

FIG. 10 is a schematic used to summarise the processes described above. In step S151 a message $m$ is received which is to be authenticated. In step S15 1, a MAC tag $t$ is computed from the message $m$.

The key for computing the tag $t$ is obtained from adjustable key combiner 153 which is a key combiner of the type described with reference to FIGs. 8 and 9. The adjustable key combiner 153 can take inputs from a variety of sources as described above. This can include pre-shared symmetric keys (PSKs), installed into Alice and Bob by the vendor at the time of device manufacture (or installed by users manually). Generated QKD keys can also be used by the key combiner, e.g. as obtained from the system's Key Management System. The Authentication Engine also includes functionality to exchange symmetric secrets using asymmetric classical cryptography S161, for feeding into the key combiner stage. Such classical key exchange involves the sharing of classical (non-quantum) information between Alice and Bob, for computing symmetric secret keys that are identical at each party. Keys may also be shared over a classical channel using post quantum cryptography in S159.

The message $m$ and tag $t$ is sent over communication channel 157 to Bob. At Bob's receiver in step S163, Bob's MAC tag $t_b$ is computed from the received message $m$ using the same keys obtained from Bob's key combiner 165. In step S167, Bob's computed tag $t_b$ is compared with the received tag $t$ If the tags match, then the message is authenticated in S169. If the tags do not match, then the message is not authenticated in set S171. If the message is not authenticated, an alarm might be raised as this indicates that the system has been compromised.

The above has used MACs as a way to authenticate the message using the combined key. However, the combined key can potentially be used with any type of signature, even asymmetric signatures.

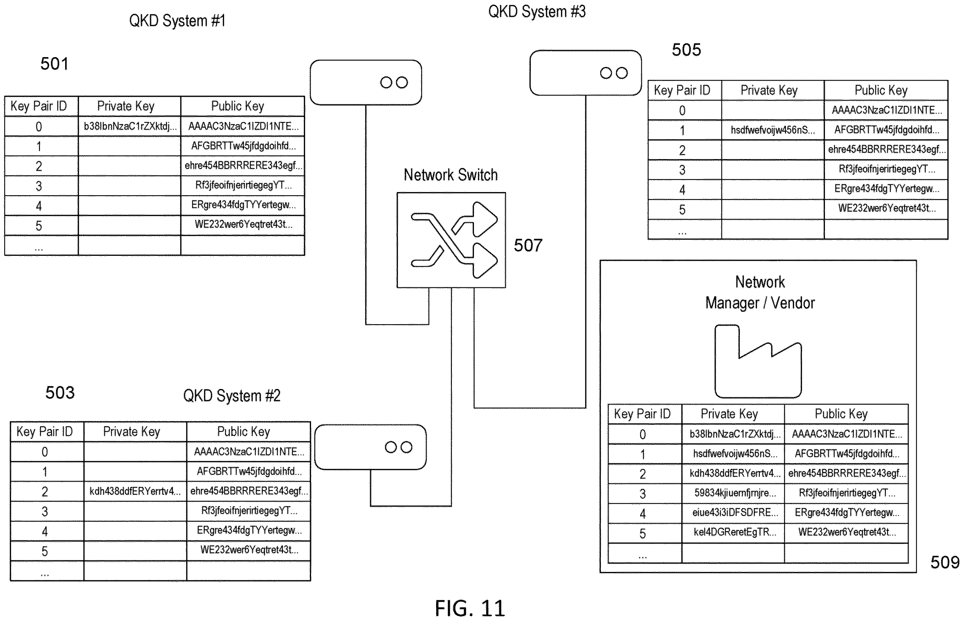

FIG. 11 is a schematic of a quantum communication network. The network comprises a first system 501, a second system 503 and a third system 505. The first, second and third system are connected via a switch 507 which allows selective communication between the systems. A network manager/vendor 509 administers the systems.

The above described key exchange approaches performed over a classical channel (conventional & PQC) require public keys for a user (e.g. Alice) to be available for another user to use (e.g. Bob). Care must be taken in obtaining the public key since if an attacker is available to 'trick' the user into using an erroneous public key, then they can act as a man in the middle. Any keys exchanged classically during this time could thus be insecure and should not be used for input to the key combiner (admittedly, the benefit of a key combiner stage is that one bad key input cannot break the overall QKD authentication, although it is still important to minimize the risk of this happening through careful public key management).

For a QKD network comprising multiple systems 501, 503 and 505, for example with a central switch 507 for reconfiguring which units are connected, the QKD nodes need to talk to other systems which each have their own public key. The public key cannot simply be sent over a public internet, since this could be intercepted/manipulated.

The system of FIG. 11 uses pre-shared public keys. For example, if Alice and Bob are to communicate in the field, then Alice's public key can be pre-installed into Bob and vice versa. The pre-installation of public keys corresponding to different users is distinct from the earlier described concept of pre-installed pre-shared symmetric key material (to use directly for keying MACs). However, this does not scale beyond few-user networks.

One approach to scaling to moderate-scale networks is shown in FIG. 11, here, a large number of indexed private/public key pairs are generated in advance, either by a network operator or the network vendor 509. These keypairs are all stored securely in a central database (shown at Vendor 509). As each new system is manufactured, or provisioned, it can be assigned an ID and associated public/private key pair from the database. The private key is extracted from the secure key table at the network manager / vendor and installed into the new system. All indexed public keys are also installed into the new QKD systems 501, 503, 505. Therefore, whenever a node wishes to perform QKD with the new system, it can simply query it for its private/public key index and look up the public key in its own database, without the need for the key to be sent. An attacker cannot pose as a man in the middle since if they try to trick the system input using a different key, e.g. by changing the ID, then the attacker still can't authenticate with the system since the attacker will not have the private key for any of the pre-generated secure keys.

In a further embodiment, a number of private keys are allocated to each system in advance, thus enabling them to rotate keys after a given time frame. For large-scale networks, public keys may also be obtained from certificates within a public key infrastructure setting. Such PKI is well established for classical key exchange. PQC PKI is not yet available but it is expected that all the concepts of CAs and certificates could be used with PQC algorithms too.

The authentication engine can be implemented in software and can leverage the classical communication stack of the QKD system, e.g. for executing the conventional and PQC key exchange stage. The classical and PQC key exchange can be run on demand - i.e. the authentication engine obtains keys to input to the combiner just-in-time. Alternatively, the classical key exchange stage could run as a daemon to continually populate key pools of conventional and PQC keys. When the key combiner is ready for input, the keys could be taken from the pool. The advantage of this is zero delay in obtaining a classical key, but it is generally considered a best practice to minimise key lifetimes - thus, it can be left as a user policy item to choose whether they obtain classical keys on demand or using a pre-filled pool (where the time-to-live for the pool can be set too).

The authentication engine has thus far been described as using the classical communication link as part of the QKD system to share keys. However, in a separate embodiment, the classical key exchange may be performed out-of-band, for example using a public internet connection between Alice and Bob.

The authentication engine may be implemented as software, or alternatively using hardware acceleration. For example, many of the core routines of cryptography-related algorithms are well suited for fast execution on FPGA or specialised ASICs/GPUs, enabling faster classical key change and reduced power consumption.

In all references to random numbers in this document, e.g. as used for generating keys and for key exchange/encapsulation algorithms, the source of randomness could be a pseudorandom number generator (PRNG). In other embodiments, the randomness source could be a quantum random number generators, such as one built into the QKD system. Alternatively, QKD keys could be used as random numbers, since they are effectively generated from quantum randomness.

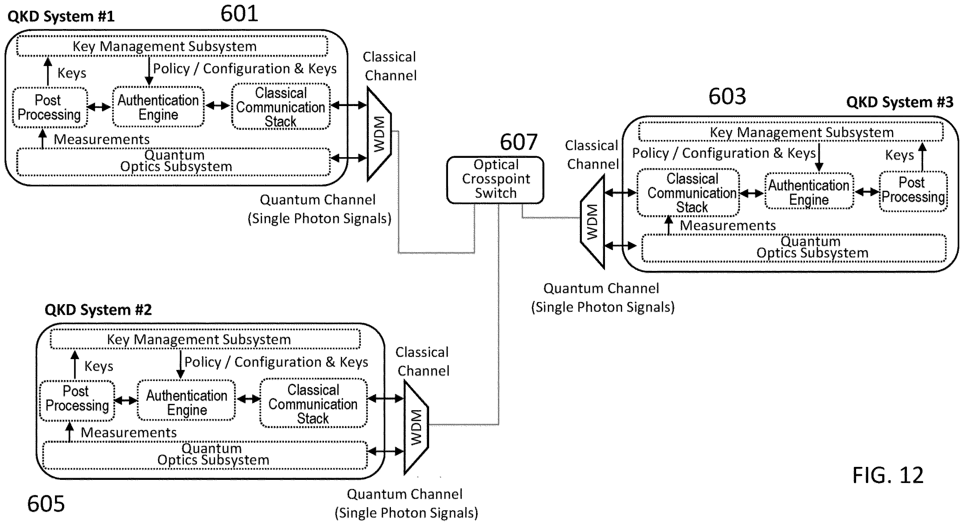

FIG. 12 shows a 3-node QKD network comprising 3 QKD systems 601, 603 and 605. Each system is of the type described with reference to FIG. 2 therefore, to avoid any unnecessary repetition, like reference numerals will be used to denote like features. The authentication engine 107 described above and is able to authenticate with every other node on the network.

The quantum and classical channels from each node are multiplexed together into a single fibre. The systems 601, 603 and 605 are connected via optical crosspoint switch 607.

Other embodiments are also possible. For example, free-space or satellite links could be used to connect nodes. Additionally, quantum-repeater-like QKD protocols and designs, such as measurement device independent (MDI) and twin-field (TF) QKD are also possible, which could use the same authentication approach to verify integrity and authenticity of the post processing messages.

Further embodiments are set out in the following clauses in which:

1. A node for a quantum communication network, the node comprising:

an authentication unit and a quantum key distribution unit,
the authentication unit being configured to authenticate a channel between the node and a second node in the quantum communication network to form an authenticated channel,
the quantum key distribution unit being configured to allow a quantum key to be distributed between the node and the second node, the quantum key being sifted and processed using communication over the authenticated channel to establish a first quantum key for the node and the second node,
wherein the authentication unit comprises key management logic, the key management logic configured to provide access to a plurality of different key types, said key types being provided by at least: pre-shared keys; keys shared with the second node via the quantum key distribution unit; and key shared with the second node via a classical communication channel
the authentication unit being configured to receive information concerning the operation of the quantum communication network and select at least one or more keys from the plurality of key types accessible via the key management logic to produce an authentication key, the authentication unit being configured to authenticate the channel using said authentication key.

2. A node according to clause 1, wherein the authentication unit is configured to authenticate the channel by producing a signature for a message to be sent from the node to the second node, the signature being produced by hashing and encrypting at least part of the message using the authentication key.

3. A node according to either of clauses 1 or 2, wherein the information concerning the operation of the system is select from at least one of: policies controlling the quantum network; the number of pre-shared keys and keys shared with the second node via the quantum key distribution unit; measurements relating to the operation quantum communication network; and parameters of a quantum key distribution session.

4. A node according to any preceding clause, wherein the authentication unit is configured to increase the length of a key using a pseudorandom function.

5. A node according to clause 4, wherein the authentication unit is configured to combine two of the keys of different types by using one key to seed a pseudorandom function used to increase the length of another key.

6. A node according to any preceding clause, wherein the authentication unit is configured to select a plurality of keys of different types and combine them to produce an authentication key.

7. A node according to clause 6, wherein the plurality of keys are combined using an XOR function.

8. A node according to any preceding clause, wherein the keys shared with the second node via a classical communication channel are selected from one or more of keys shared using classical key exchange protocols and post quantum key exchange.

9. A node according to clause 8, wherein post quantum key exchange protocols are protocols that are quantum resistant cryptographic algorithms.

10. A node according to clause 9, wherein quantum resistant cryptographic algorithms are selected from code-based cryptography, lattice-based cryptography, hash-based cryptography, multivariate cryptography and key encapsulation mechanisms.

11. A node according to clause 8, wherein the classical key exchange protocols are selected from Diffie-Hellman (DH) or Elliptic Curve Diffie-Hellman (ECDH).

12. A node according to any preceding clause, wherein the authentication engine is configured to authenticate the channel using a Wegman-Carter protocol where a message is subjected to a keyed hash to produce a tag of known length and then subjected to encryption using the authentication key.

13. A node according to clause 9, wherein the authentication unit is configured to select a first key to produce the keyed hash and a second key is used for encryption, the first and second keys being different, both produced using the key management logic wherein different combinations of key types are used for the first key and the second key.

14. A node according to any preceding clause, wherein the authentication unit is configured to generate keys shared with the second node via a classical communication channel using at least one selected from classical key generation algorithms and PQC key generation algorithms to allows these keys to be stored ready for use.

15. A node according to any preceding clause, wherein the quantum key distribution unit is configured to generate keys to add to a key store of keys shared with the second node via the quantum key distribution unit.

16. A node in accordance with clause 2, wherein the authentication unit is configured to compare the signature it has generated from the message with a signature received with the message, the authentication unit being configured to determine that the message is authenticated if the signatures match.

17. A quantum communication system comprising:

a first node which is a node in accordance with clause 2; and
a second node which is a node in accordance with clause 16.

18. A quantum communication system according to clause 17, wherein each node comprises a classical key store which comprises a plurality of public keys in a look up table, the authentication unit being configured to receive an index indicating a public key to use from its look-up table.

19. A method of producing a signed message for authentication in a quantum communication network, the method comprising:

receiving a message to be sent over an authenticated channel;
producing an encryption key; and
generating a signature from said message using the authentication key,
wherein producing an authentication key comprises receiving information concerning the operation of the quantum communication network and selecting at least one key type from a plurality of different key types of the basis of this received information, wherein the key types are selected from: pre-shared keys; keys obtained by sharing a key via a quantum key distribution unit; and keys shared over a classical communication channel.

20. A method according to clause 19, wherein producing the authentication key comprises combining two or more of the plurality of types of keys.

Whilst certain embodiments have been described, these embodiments have been presented by way of example only, and are not intended to limit the scope of the inventions. Indeed, the novel devices, and methods described herein may be embodied in a variety of other forms; furthermore, various omissions, substitutions and changes in the form of the devices, methods and products described herein may be made without departing from the spirit of the inventions. The accompanying claims and their equivalents are intended to cover such forms or modifications as would fall within the scope and spirit of the inventions.

**Claims**

1. A node for a quantum communication network, the node comprising:

   an authentication unit and a quantum key distribution unit,
   the authentication unit being configured to authenticate a channel between the node and a second node in the quantum communication network to form an authenticated channel,
   the quantum key distribution unit being configured to allow a quantum key to be distributed between the node and the second node, the quantum key being sifted and processed using communication over the authenticated channel to establish a first quantum key for the node and the second node,
   wherein the authentication unit comprises key management logic, the key management logic configured to provide access to a plurality of different key types, said key types being provided by at least: pre-shared keys; keys shared with the second node via the quantum key distribution unit; and key shared with the second node via a classical communication channel
   the authentication unit being configured to receive information concerning the operation of the quantum communication network and select at least one or more keys from the plurality of key types accessible via the key management logic to produce an authentication key, the authentication unit being configured to authenticate the channel using said authentication key.

2. A node according to claim 1, wherein the authentication unit is configured to authenticate the channel by producing a signature for a message to be sent from the node to the second node, the signature being produced by hashing and encrypting at least part of the message using the authentication key.

3. A node according to either of claims 1 or 2, wherein the information concerning the operation of the system is select from at least one of: policies controlling the quantum network; the number of pre-shared keys and keys shared with the second node via the quantum key distribution unit; measurements relating to the operation quantum communication network; and parameters of a quantum key distribution session.

4. A node according to any preceding claim, wherein the authentication unit is configured to increase the length of a key using a pseudorandom function, and optionally where the authentication unit is configured to combine two of the keys of different types by using one key to seed a pseudorandom function used to increase the length of another key.

5. A node according to any preceding claim, wherein the authentication unit is configured to select a plurality of keys of different types and combine them to produce an authentication key, and optionally where the plurality of keys are combined using an XOR function.

6. A node according to any preceding claim, wherein the keys shared with the second node via a classical communication channel are selected from one or more of keys shared using classical key exchange protocols and post quantum key exchange.

7. A node according to claim 6, wherein post quantum key exchange protocols are protocols that are quantum resistant cryptographic algorithms and optionally where the quantum resistant cryptographic algorithms are selected from code-based cryptography, lattice-based cryptography, hash-based cryptography, multivariate cryptography and key encapsulation mechanisms.

8. A node according to any preceding claim, wherein the authentication engine is configured to authenticate the channel using a Wegman-Carter protocol where a message is subjected to a keyed hash to produce a tag of known length and then subjected to encryption using the authentication key.

9. A node according to claim 8, wherein the authentication unit is configured to select a first key to produce the keyed hash and a second key is used for encryption, the first and second keys being different, both produced using the key management logic wherein different combinations of key types are used for the first key and the second key.

10. A node according to any preceding claim, wherein the authentication unit is configured to generate keys shared with the second node via a classical communication channel using at least one selected from classical key generation algorithms and PQC key generation algorithms to allows these keys to be stored ready for use.

11. A node according to any preceding claim, wherein the quantum key distribution unit is configured to generate keys to add to a key store of keys shared with the second node via the quantum key distribution unit.

12. A node in accordance with claim 2, wherein the authentication unit is configured to compare the signature it has generated from the message with a signature received with the message, the authentication unit being configured to determine that the message is authenticated if the signatures match.

13. A quantum communication system comprising:

  a first node which is a node in accordance with claim 2; and
  a second node which is a node in accordance with claim 16.

14. A quantum communication system according to claim 13, wherein each node comprises a classical key store which comprises a plurality of public keys in a look up table, the authentication unit being configured to receive an index indicating a public key to use from its look-up table.

15. A method of producing a signed message for authentication in a quantum communication network, the method comprising:

  receiving a message to be sent over an authenticated channel;
  producing an encryption key; and
  generating a signature from said message using the authentication key,
  wherein producing an authentication key comprises receiving information concerning the operation of the quantum communication network and selecting at least one key type from a plurality of different key types of the basis of this received information, wherein the key types are selected from: pre-shared keys; keys obtained by sharing a key via a quantum key distribution unit; and keys shared over a classical communication channel.

**FIG. 1A**

Alice 1

Bob 3

S5 Prepare Quantum States

S7 Measure Quantum States

**Quantum State Encoding/Measurement**

transmit on quantum channel

Sifting S9

Error correction S11

Privacy Amplification S13

**Post-Processing**

authenticated classical channel

Output QKD Keys to Keystore S15

**Key Management**

Keys delivered to applications

Time

FIG. 1B

FIG. 1C

EP 4 546 706 A1

FIG. 2

EP 4 546 706 A1

FIG. 3

**Alice : Bob**

Transmitted Message → Compute MAC ← S201
Preshared Symmetric Key →
→ Tag & Message

Received Message & Tag → Compute MAC ← S207
Preshared Symmetric Key →
→ Recomputed Tag

S209 → Does Received Tag == Recomputed Tag
Yes → Authentication Success
No → Authentication Failure

FIG. 4

Message → Compute Hash → Encryption → MAC Tag
S203
Key → (Some key bits used for keying hash function, others for keying encryption stage)
S205
**MAC Computation Stage**
S201

FIG. 5

**Alice**                                              **Bob**

Agree on parameters,          ⟷          Agree on parameters,          S251
prime number $p$ and root $g$                prime number $p$ and root $g$

Generate random                                Generate random                S253
private key, $a$                                  private key, b

Generate public                                Generate public                  S255
key, $A=g^a \bmod p$   Share public keys   key, $B=g^b \bmod p$

Time

Compute Shared                                Compute Shared
Secret:                                              Secret:                            S257
$S = B^a \bmod p$                              $S = A^b \bmod p$

FIG. 6

EP 4 546 706 A1

Alice creates a **keypair**

Private     Public

**Private Key** is kept secret     **Alice**     **Public Key** is available to anyone

S271

**Bob** uses **Alice's public key** to generate a **shared secret** and encapsulate it as a **ciphertext**

Public     Shared Secret     Ciphertext

cbfdac6008f9cab4083784c     8cb2237d0...88db6464

**Bob**

**Bob** sends the **ciphertext** back to **Alice**

S273

8cb2237d0...88db6464

**Alice** uses her **private key** and the **ciphertext** to decapsulate the **shared secret**

8c...237d0...88db6464

**Alice**

Shared Secret

cbfdac6008f9cab4083784c

S275

When they're done, both **Alice** and **Bob** have the **same shared secret**

cbfdac6008f9cab4083784c

**Alice**     **Bob**

The **shared secret** can be used for **symmetric encryption**

S277

FIG. 7

EP 4 546 706 A1

FIG. 8

QKD Metrics
(e.g. QBER, Count Rate, SBR)

Size of Key Pool

QKD Session Information (e.g. index / timings)

User Security Policy (e.g. weightings)

Link Metrics (e.g. length/loss)

Network Policy (e.g. from SDN controller)

**Key Combiner Decision Logic**

131

Set Parameters

Input State (e.g. counter)

Set Parameters

117    Classical (DH)    Include?    PRF    153

149

119    PQC (Kyber)    Include?    PRF    151

147

115    QKD    Include?    XOR    $k_{out}$    157

145    

Include?    143    155

113    PSK

FIG. 9

EP 4 546 706 A1

EP 4 546 706 A1

**Alice** | **Bob**

155 — Pre-Shared Keys

PQC Key Encapsulation (e.g. using CRYSTALS Kyber)    S161    S159

Classical Key Exchange (e.g. using ECDH)

QKD Keys    QKD Keys    Pre-Shared Keys

153 — User Policy & QKD Metrics

Adjustable Key Combiner

Message, $m$    Compute MAC Tag, $t_1$ from m    S151

Tag, $t_1$ & Message, $m$

Communication Channel (e.g. Fibre)    157

Adjustable Key Combiner    165 — User Policy & QKD Metrics

Compute MAC Tag, $t_2$ from m    S163

$m$, $t_1$ and $t_2$

Does Received Tag $t_1$ == Recomputed Tag $t_2$?    S167

Yes → **Message Authenticated.** Drop tags and accept message.    S169

No → **Authentication Failure.** Drop message and raise alarm.    S171

FIG. 10

QKD System #1

**501**

| Key Pair ID | Private Key | Public Key |
|---|---|---|
| 0 | b38lbnNzaC1rZXktdj... | AAAAC3NzaC1lZDI1NTE... |
| 1 | | AFGBRTTw45jfdgdoihfd... |
| 2 | | ehre454BBRRRERE343egf... |
| 3 | | Rf3jfeoifnjerirtiegegYT... |
| 4 | | ERgre434fdgTYYertegw... |
| 5 | | WE232wer6Yeqtret43t... |
| ... | | |

QKD System #3

**505**

| Key Pair ID | Private Key | Public Key |
|---|---|---|
| 0 | | AAAAC3NzaC1lZDI1NTE... |
| 1 | hsdfwefvoijw456nS... | AFGBRTTw45jfdgdoihfd... |
| 2 | | ehre454BBRRRERE343egf... |
| 3 | | Rf3jfeoifnjerirtiegegYT... |
| 4 | | ERgre434fdgTYYertegw... |
| 5 | | WE232wer6Yeqtret43t... |
| ... | | |

Network Switch

**507**

Network Manager / Vendor

| Key Pair ID | Private Key | Public Key |
|---|---|---|
| 0 | b38lbnNzaC1rZXktdj... | AAAAC3NzaC1lZDI1NTE... |
| 1 | hsdfwefvoijw456nS... | AFGBRTTw45jfdgdoihfd... |
| 2 | kdh438ddfERYerrtv4... | ehre454BBRRRERE343egf... |
| 3 | 59834kjiuernfjrnjre... | Rf3jfeoifnjerirtiegegYT... |
| 4 | eiue43i3iDFSDFRE... | ERgre434fdgTYYertegw... |
| 5 | kel4DGReretEgTR... | WE232wer6Yeqtret43t... |
| ... | | |

**509**

**503**   QKD System #2

| Key Pair ID | Private Key | Public Key |
|---|---|---|
| 0 | | AAAAC3NzaC1lZDI1NTE... |
| 1 | | AFGBRTTw45jfdgdoihfd... |
| 2 | kdh438ddfERYerrtv4... | ehre454BBRRRERE343egf... |
| 3 | | Rf3jfeoifnjerirtiegegYT... |
| 4 | | ERgre434fdgTYYertegw... |
| 5 | | WE232wer6Yeqtret43t... |
| ... | | |

FIG. 11

FIG. 12

**EUROPEAN SEARCH REPORT**

Europäisches
Patentamt
European
Patent Office
Office européen
des brevets

| Application Number |
| --- |
| EP 24 19 5031 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | US 2023/275752 A1 (WOODWARD ROBERT IAN [GB] ET AL) 31 August 2023 (2023-08-31) * paragraphs [0081], [0095] - [0099], [0130], [0216], [0226], [0227]; figure 3 * | 1-15 | INV. H04L9/08 H04L9/32 |
| Y | MEHIC MIRALEM ET AL: "Quantum Cryptography in 5G Networks: A Comprehensive Overview", IEEE COMMUNICATIONS SURVEYS & TUTORIALS, IEEE, vol. 26, no. 1, 25 August 2023 (2023-08-25), pages 302-346, XP011961524, DOI: 10.1109/COMST.2023.3309051 [retrieved on 2023-08-28] * note 8 section VIII; figure 10 * | 1-15 | |
| Y | WO 2004/073234 A2 (MAGIQ TECHNOLOGIES INC [US]; BERZANSKIS AUDRIUS [US] ET AL.) 26 August 2004 (2004-08-26) * page 5 - page 7 * * page 12 - page 13 * | 1-15 | **TECHNICAL FIELDS SEARCHED (IPC)** H04L |
| Y | US 2011/188659 A1 (KHALID MOHD AMINUDIN BIN MOHD [MY] ET AL) 4 August 2011 (2011-08-04) * paragraph [0029] * | 1-15 | |
| Y | US 2020/274701 A1 (YUAN ZHILIANG [GB] ET AL) 27 August 2020 (2020-08-27) * paragraphs [0112] - [0118], [0127] - [0133] * | 1-15 | |

-/--

The present search report has been drawn up for all claims

| Place of search | Date of completion of the search | Examiner |
| --- | --- | --- |
| Munich | 23 January 2025 | Manet, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 24 19 5031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | "Chapter 13: Key Management Techniques ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590 , 1 October 1996 (1996-10-01), XP001525013, ISBN: 978-0-8493-8523-0 Retrieved from the Internet: URL:http://www.cacr.math.uwaterloo.ca/hac/ * section 13.4 * | 14 | |
| | | | **TECHNICAL FIELDS SEARCHED (IPC)** |

The present search report has been drawn up for all claims

| Place of search | Date of completion of the search | Examiner |
|---|---|---|
| Munich | 23 January 2025 | Manet, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 5031

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | | | Publication date | Patent family member(s) | | | Publication date |
|---|---|---|---|---|---|---|---|
| US 2023275752 | A1 | | 31-08-2023 | EP | 4236194 | A1 | 30-08-2023 |
| | | | | GB | 2616049 | A | 30-08-2023 |
| | | | | JP | 2023124773 | A | 06-09-2023 |
| | | | | JP | 2024153718 | A | 29-10-2024 |
| | | | | US | 2023275752 | A1 | 31-08-2023 |
| WO 2004073234 | A2 | | 26-08-2004 | EP | 1537698 | A2 | 08-06-2005 |
| | | | | EP | 1590918 | A2 | 02-11-2005 |
| | | | | JP | 4353946 | B2 | 28-10-2009 |
| | | | | JP | 2006513678 | A | 20-04-2006 |
| | | | | JP | 2006514512 | A | 27-04-2006 |
| | | | | US | 2004161109 | A1 | 19-08-2004 |
| | | | | US | 2006059343 | A1 | 16-03-2006 |
| | | | | WO | 2004073234 | A2 | 26-08-2004 |
| | | | | WO | 2004073235 | A2 | 26-08-2004 |
| US 2011188659 | A1 | | 04-08-2011 | CN | 102210121 | A | 05-10-2011 |
| | | | | EP | 2324594 | A2 | 25-05-2011 |
| | | | | MY | 147120 | A | 31-10-2012 |
| | | | | US | 2011188659 | A1 | 04-08-2011 |
| | | | | WO | 2010030161 | A2 | 18-03-2010 |
| US 2020274701 | A1 | | 27-08-2020 | GB | 2581528 | A | 26-08-2020 |
| | | | | JP | 7021272 | B2 | 16-02-2022 |
| | | | | JP | 2020145672 | A | 10-09-2020 |
| | | | | US | 2020274701 | A1 | 27-08-2020 |
| | | | | US | 2022045855 | A1 | 10-02-2022 |

EPO FORM P0459

For more details about this annex : see Official Journal of the European Patent Office, No. 12/82